# EUROPEAN PATENT APPLICATION

(11) **EP 2 472 491 A1**
(43) Date of publication of application: **04.07.2012**
(21) Application number: 10820470.2
(22) Date of filing: 27.09.2010
(51) Int. Cl.: G08G 1/0965, B60R 21/00, G01C 21/00, G08G 1/09, G09B 29/00, G09B 29/10

(54) **VEHICLE-TO-VEHICLE COMMUNICATION DEVICE**

(30) Priority: 30.09.2009 JP 2009226814
(71) Applicant: Sanyo Electric Co., Ltd., Osaka 570-8677 (JP); Sanyo Consumer Electronics Co., Ltd., Tottori-shi Tottori 680-8634 (JP)
(72) Inventor: IMANAGA Akira, Tottori-Shi Tottori 680-8634 (JP); HIROSE Naoki, Tottori-Shi Tottori 680-8634 (JP)
(74) Representative: Glawe, Delfs, Moll
(86) International application number: PCT/JP2010/066658
(87) International publication number: WO 2011/040355

(57) **Abstract**

Disclosed is a vehicle-to-vehicle communication device provided with: a wireless communication unit; a GPS device; a position-information acquisition unit that uses the GPS device to acquire position information; a display unit or a voice output unit; a recording unit in which map information is recorded; an emergency-vehicle detection unit that receives, from the wireless communication unit, emergency-vehicle information that includes information on emergency vehicles, and then on the basis of the position information, the emergency-vehicle information, or the map information, determines whether there are any emergency vehicles within a prescribed range of the local vehicle; a determination unit that, if an emergency vehicle is detected, uses the abovementioned various information to determine the approach status of the emergency vehicle with respect to the local vehicle; and an annunciation unit that uses the display unit or voice output unit to provide a notification of the determined approach status.

## Description

### Technical Field

The present invention is related to a vehicle-to-vehicle communication device for establishing mutual communication between a vehicle and a vehicle, or between a vehicle and a roadside device, and in particular, the present invention is related to a vehicle-to-vehicle communication device that provides a driver with a notification indicating a state of approach of an emergency vehicle when the emergency vehicle is approaching the driver.

### Background Art

In recent years, road-vehicle communication systems have been in practical use to provide a variety of services by establishing communication between a roadside device which is placed on a road side and an in-vehicle device which is installed in a vehicle. In particular, development has been in progress toward a system that employs an information and communication technology called ITS (Intelligent Transport System) to allow a pedestrian, a vehicle, and a roadside device to share, and make use of, various kinds of information.

The ITS mainly aims at improving safety, transportation efficiency, and more comfortable transportation. Specifically, for example, an automatic toll collection system, assistance for driving, optimization of traffic control, more efficient road control, assistance for driving emergency vehicles, and the like have been considered. A typical example of the ITS that is currently in practical use is an ETC (Electronic Toll Collection) system for toll ways.

An example of technologies for achieving the services mentioned above is a vehicle-to-vehicle communication in which vehicles communicate with each other via wireless communication devices installed in the vehicles. Another example is road-to-vehicle communication in which a wireless communication device placed, for example, on a road side as a roadside device and a wireless communication device installed in a vehicle communicate with each other. There has been proposed a technology for providing a notification related to an emergency vehicle (as defined in the Road Traffic Act) such as an ambulance, a fire engine, of a patrol car.

It is customary in Japan for a vehicle driver who has found an emergency vehicle approaching him/her to move his/her own vehicle to the left to give way to the emergency vehicle. However, a problem is that it is difficult to judge whether the emergency vehicle is coming toward or going away from his/her vehicle merely by a siren sound of the emergency vehicle.

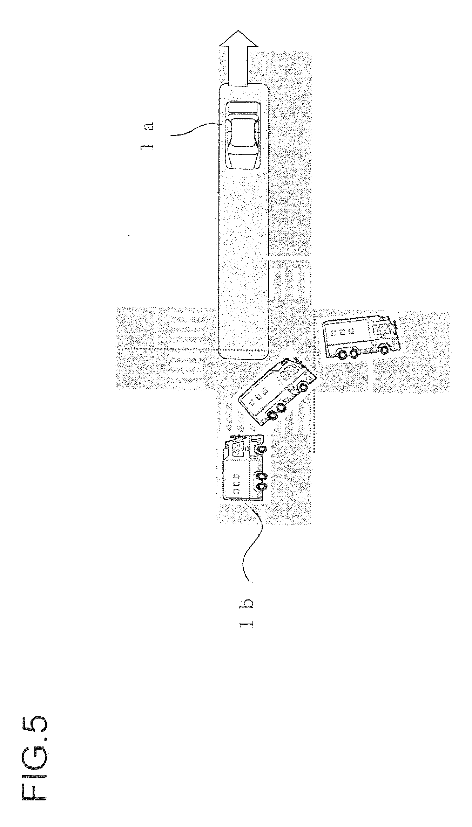

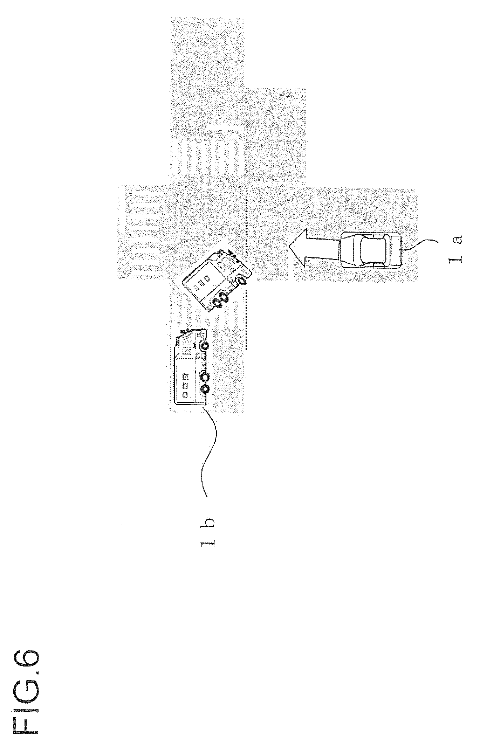

For example, as shown in a schematic view of FIG. 5, there is a case in which, even though a vehicle driver has moved his/her own vehicle 1a to the left to give way to an emergency vehicle 1b approaching from behind, the emergency vehicle 1b turns a corner immediately behind him/her and moves away. Furthermore, for example, there is a case in which the emergency vehicle 1b makes a right turn at an intersection when the own vehicle 1a is stationary at the intersection as shown in a schematic view of FIG. 6, and in such a case, the own vehicle 1a is not able to move to give way to the emergency vehicle 1b and thus prevents the emergency vehicle 1b from proceeding.

To deal with the cases as described above, it is desirable to notify a driver, in advance, whether or not there is a possibility of an approaching emergency vehicle overtaking his/her vehicle from behind or whether or not there is a possibility of an approaching emergency vehicle crossing his/her vehicle from front, to thereby assist the driver in judging whether he/she should move his/her vehicle to the left or not.

In relation to the above discussion, Patent Literature 1 discloses an emergency vehicle approach notification system that, in a case in which an emergency vehicle has approached an intersection, provides a notification to a general vehicle indicating that the emergency vehicle has approached. In this emergency vehicle approach notification system, when an emergency vehicle approaches an intersection, emergency notification sound that the emergency vehicle generates is detected. Then, approach direction judgment means judges an approach direction of the emergency vehicle.

Furthermore, transmission means transmits approach information which indicates the approach direction of the emergency vehicle to a predetermined communication area that is set along a road extending from the intersection. If a general vehicle is located in the communication area of the transmission means, reception means mounted in the general vehicle receives the approach information. Then, notification means installed in the general vehicle gives a passenger of the general vehicle a predetermined withdrawal instruction according to the approach information.

### Citation List

### Patent Literature

Patent Literature 1: JP-A-2008-52341

### Summary of Invention

### Technical Problem

However, with the emergency vehicle approach notification system of Patent Literature 1, a roadside device needs to be placed on a road side to transmit information. Thus, the systems cannot be practiced on a road where no roadside device is placed. What is more inconvenient, with the emergency vehicle approach notification system, although it is possible to provide, to the own vehicle, a notification indicating that an emergency vehicle exists near an own vehicle, it is impossible to provide a notification indicating whether the emergency vehicle is approaching or driving away from the own vehicle.

Therefore, it is impossible to provide a driver with a notification indicating what actions he/she should take, that is, for example, whether or not he/she should move his/her vehicle to a road side, according to a state of approach of an emergency vehicle obtained through vehicle-to-vehicle communication or road-to-vehicle communication, to thereby assist the driver with judgment.

The present invention has been made in view of the above problems, and an object of the present invention is to provide a vehicle-to-vehicle communication device capable of providing a driver of a vehicle with a notification for assisting him/her with driving, according to whether an emergency vehicle is coming coward or going away from his/her vehicle.

### Solution to Problem

To achieve the above object, according to the present invention, a vehicle-to-vehicle communication device includes a wireless communication section which performs wireless communication by using an antenna, a GPS (Global Positioning System) device which performs communication with a GPS satellite, a position information acquisition section which acquires position information by using the GPS device, a display section or a voice output section, a recording section in which map information is recorded, an emergency vehicle detection section which receives emergency vehicle information including information related to an emergency vehicle via the wireless communication section, the emergency vehicle detection section judging, based on the position information, the emergency vehicle information, or the map information, whether or not the emergency vehicle exists within a predetermined range from an own vehicle which is a vehicle in which the vehicle-to-vehicle communication device is installed, a judgment section which, in a case where the emergency vehicle is detected by the emergency vehicle detection section, judges a state of approach of the emergency vehicle with respect to the own vehicle based of the position information, the emergency vehicle information, or the map information, and a notification section which provides a passenger of the own vehicle with a notification indicating the state of approach judged by the judgment section, by using the display section or the voice output section.

According to this configuration, the vehicle-to-vehicle communication device of the present invention includes a wireless communication section which performs wireless communication by using an antenna and a GPS device which performs communication with a GPS satellite. The vehicle-to-vehicle communication device of the present invention also includes a position information acquisition section which acquires position information by using the GPS device. The vehicle-to-vehicle communication device of the present invention also includes a display section or a voice output section, and a recording section in which map information is recorded. The vehicle-to-vehicle communication device of the present invention also includes an emergency vehicle detection section which receives, via the wireless communication section, emergency vehicle information including information related to an emergency vehicle, and judges whether or not the emergency vehicle exists within a predetermined range from an own vehicle based on the position information, the emergency vehicle information, or the map information. The vehicle-to-vehicle communication device of the present invention also includes a judgment section which, in a case in which an emergency vehicle is detected by the emergency vehicle detection section, judges a state of approach of the emergency vehicle with respect to the own vehicle, by using the above-described information. The vehhicle-to-vehicle communication device of the present invention also includes a notification section which provides a notification indicating the state of approach judged by the judgment section, by using the display section or the voice output section. As a result, it is possible to determine contents of a notification to be provided according to the driving state of an approaching emergency vehicle and the positional relationship between the approaching emergency vehicle and the own vehicle.

Preferably, to achieve the above object, according to the present invention, in the vehicle-to-vehicle communication device, the judgment section judges, based on the position information, the map information, and a position and a blinker operation state of an emergency vehicle indicated in the emergency vehicle information, whether or not the emergency vehicle is going to overtake the own vehicle from behind, or, whether or not the emergency vehicle is going to cross the own vehicle from front, and the notification section provides a notification indicating a result of the judgment.

According to this configuration, the judgment section judges, based on the position information, the map information, and a position and a blinker operation state of the emergency vehicle indicated in the emergency vehicle information, whether or not the emergency vehicle is going to overtake the own vehicle from behind or whether or not the emergency vehicle is going to cross the own vehicle from front, And the notification section provides a notification indicating the result of the judgment. In this way, it is possible to assist a driver of the own vehicle with avoidance actions.

Preferably, to achieve the above object, According to the present invention, in the vehicle-to-vehicle communication device, in a case in which a result of the judgment indicates that the emergency vehicle is not going to overtake the own vehicle from behind or that the emergency vehicle is not going to cross the own vehicle from front, the notification section provides a notification indicating that the own vehicle does not need to take avoidance actions.

According to this configuration, in a case in which a result of the judgment by the judgment section indicates that the emergency vehicle is not going to overtake the own vehicle from behind or that the emergency vehicle is not going to cross the own vehicle from front, the notification section provides a notification indicating that the own vehicle does not need to take avoidance actions. In this way, it is possible to provide the driver of the own vehicle with a notification indicating whether or not he/she has to take avoidance actions.

Preferably, according to the present invention, in the vehicle-to-vehicle communication device, the emergency vehicle detection section receives the emergency vehicle information by performing wireless communication with the emergency vehicle, a roadside device placed on a road, or a vehicle existing around the own vehicle by using ITS (Intelligent Transportation Systems).

According to this configuration, the emergency vehicle detection section receives the emergency vehicle information through wireless communication with the emergency vehicle, a roadside device placed on a road, or a vehicle existing around the own vehicle, by using ITS.

### Advantageous Effects of Invention

According to the present invention, a notification indicating whether or not an approaching emergency vehicle is going to overtake an own vehicle from behind or whether or not there is a possibility of an approaching emergency vehicle crossing the own vehicle from front is provided in advance. In other words, whether the emergency vehicle is approaching or driving away from the own vehicle is judged based on information related to the blinkers, the driving course, etc. of the emergency vehicle, and according to the result of the judgment, contents of a notification to be provided to the driver is determined. In this way, it is possible to assist the driver in judging whether or not he/she should move the own car to the left, to thereby reduce the driver's unnecessary steering operations.

### Brief Description of Drawings

[FIG. 1] A block diagram showing a device configuration of a vehicle-to-vehicle communication device of the present invention;
[FIG. 2] A block diagram showing a system configuration of a system including the vehicle-to-vehicle communication device of the present invention;
[FIG. 3] A table showing a data configuration, of information provided in vehicle-to-vehicle communication according to an embodiment of the present invention;
[FIG. 4] A flow chart showing an emergency vehicle notification processing according to an embodiment of the present invention;
[FIG. 5] A schematic diagram schematically showing a traffic condition on a road; and
[FIG. 6] A schematic diagram schematically showing a traffic condition on a road.

### Description of Embodiments

Hereinafter, an embodiment of the present invention will be described with reference to the accompanying drawings. Note that the embodiments herein are merely illustrative and the present invention is not limited to these embodiments.

### < 1. Configuration of Vehicle-to-Vehicle Communication System >

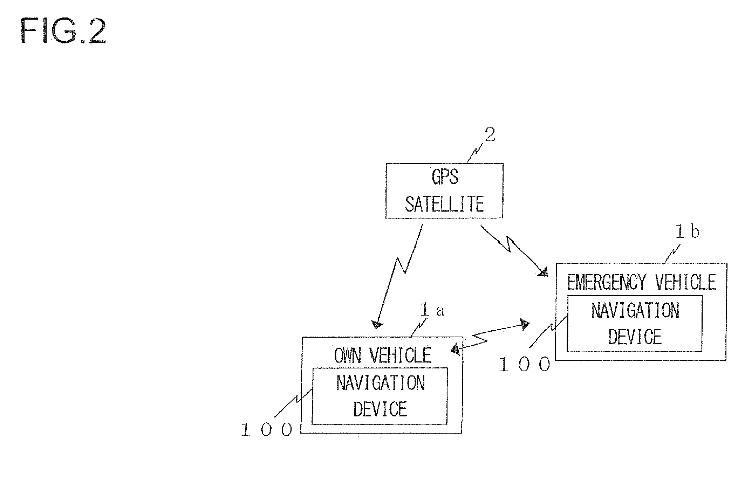

FIG. 2 is a block diagram showing a configuration of a system achieved with a vehicle-to-vehicle communication device according to an embodiment of the present invention. The system includes at least vehicles 1 and a GPS (Global Positioning System) satellite 2.

The vehicles 1 each have a later-described navigation device 100 (= vehicle-to-vehicle communication device) installed therein, such that mutual vehicle-to-vehicle communication can be performed between the vehicles 1. The present embodiment will be described with an own vehicle 1a as an example of the vehicle 1 in which a navigation device 100, which performs emergency vehicle notification processing of the present invention, is installed. Furthermore, the present embodiment will also be described with an emergency vehicle 1b as an example of the vehicles 1 as a detection target.

The GPS satellite 2 is placed in a satellite orbit, and transmits a specific radio wave (for example, an L1 radio wave of 1.575 GHz, etc.) to a GPS receive on the ground. In this way, various pieces of information for calculating position information, such as, coordinate information related to the GPS satellite 2, time information for measuring a period of time taken for a radio wave to propagate, etc. are transmitted.

### < 2. Configuration of Vehicle-to-Vehicle Communication Devise>

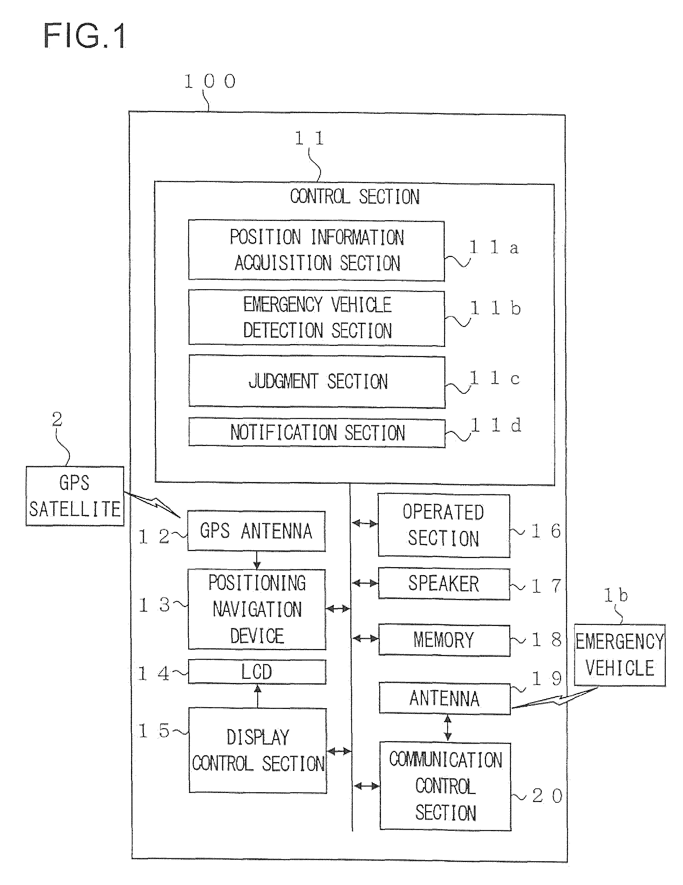

FIG. 1 is a block diagram showing an internal configuration of the navigation device 100 according to an embodiment of the present invention. The navigation device 100 of the present embodiment is an electronic device which is installed in the vehicle 1 to form part of the vehicle-to-vehicle communication system.

As shown in the block diagram of FIG. 1, the navigation device 100 of the present invention includes at least a control section 11, a GPS antenna 12 (= a GPS device), a positioning navigation device 13 (= a GPS device), an LCD (Liquid Crystal Display) 14 (= a display section), a display control section 15, an operated section 16, a speaker 17 (= a voice output section), a memory 18 (a recording section), an antenna 19 (= a wireless communication section), and a communication control sections 20 (= a wireless communication section).

The control section 11 organically controls the drive of each member of the navigation device 100, thereby performing centralized control of traffic information acquisition processing, display processing, etc. In addition, the control section 11 includes a position information acquisition section 11 a, an emergency vehicle detection section 11b, a judgment section 11c, and a notification section 11d as functional sections that are achieved when a program is executed by an arithmetic processing device incorporated in the control section 11. Detailed descriptions will be given later of processing performed by each of the functional sections.

The GPS antenna 12 is a receiver for receiving a specific radio wave (for example, the L1 radio wave of 1.575 GHz, etc.) emitted from the GPS satellite 2. The GPS antenna 12 is capable of receiving signals from a plurality of GPS satellites 2, the signals including position information and the like of each of the GPS satellites 2.

The positioning navigation device 13 is a device composed of a positioning device which generates latitude/longitude information by decoding a signal received via the GPS antenna 12 and a navigation device which generates speed information and attitude-angle information by using a gyro and a vehicle-speed sensor.

The LCD 14 is a device which displays various kinds of information which the navigation device 100 retains, such as, for example, traffic information, a menu screen, and the like. The display control section 15 encodes image information into a signal compliant with a signal format of the LCD 14, performs D/A conversion on the signal, and then outputs a resultant image signal. The image signal outputted from the display control section 15 is sent to the LCD 14, where it is displayed as an image.

The operates section 16 is an input interface which a driver of the vehicle I operates to input various instructions, such as a destination instruction, to the navigation device 100. The operated section 16 includes, for example, a plurality of push buttons, a touch sensor, and the like. Alternatively, a touch panel may be formed on a surface of the LCD 14 to accept input made by operating the touch panel.

The speaker 17 is a voice output device which outputs, toward a passenger in the vehicle 1, a voice including various kinds of information. In the present embodiment, in particular, the speaker 17 is used to output a notification voice related to approach of an emergency vehicle.

The memory 18 is a medium for recording various kinds of information. The memory 18 is used to record, for example, map information used for navigation processing (= map information) and voice information. In the present embodiment, the memory 18 is also used to record vehicle-to-vehicle communication information received from another vehicle.

The antenna 19 is arranged for transmitting/receiving a radio wave to/from the navigation device 100 installed in other vehicle 1, and as the antenna 19, for example, a plurality of diversity antennas, etc. are used. The communication control section 20 demodulates a radio wave received by the antenna 19. The communication control section 20 also has a transmission controlling function for transmitting a radio wave by using the antenna 19.

### < 3. Vehicle-to-Vehicle Communication Information >

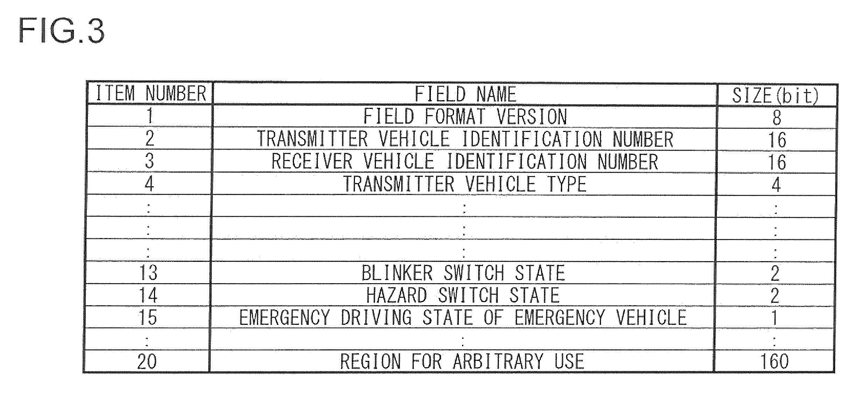

FIG. 3 shows part of a data configuration of vehiae-to-vehide communication information included in a guideline for driving assisting communication systems issued by an ITS Forum, Japan. The guideline deals with a vehicle-to-vehicle communication system using a radio wave in a frequency band of 700 MHz.

This vehicle-to-vehicle communication information is broadcast-transmitted every 100 milliseconds, from the navigation device 100 to a vehicle existing in an area therearound. The information propagates over several hundred meters. In this data configuration, item number 4 indicates a current location of an own vehicle, that is, a transmitting-side vehicle, in terms of latitude and longitude. Thus, a receiving-side vehicle which receives the vehicle-to-vehicle communication information is able to pinpoint where the transmitting-side vehicle is currently driving by referring to map information recorded in the navigation device, for example.

Item number 13 is information (= blinker information) that indicates a state of blinkers, that is, whether the blinkers are OFF, or which of right and left blinkers is ON. Item number 15 is information that indicates an emergency driving state of an emergency vehicle, that is, item number 15 shows whether an emergency vehicle is in an emergency driving state or in an ordinary driving state. Based on item number 15, it can be judged whether the transmitting-side vehicle is an emergency vehicle or not.

In the present embodiment, these pieces of information are transmitted/received in vehicle-to-vehicle communication performed by using a radio wave in the frequency band of 700 MHz. And, based on the location of a road on which an emergency vehicle is driving and the blinker state of the emergency vehicle, the state of approach of the emergency vehicle with respect to the own vehicle is estimated, and the estimation is notified to a passenger of the receiving-side vehicle. It should be noted that the vehicle-to-vehicle communication system used by the navigation device of the present invention is not limited to a wireless communication system using a radio wave in the frequency band of 700 MHz, and may be changed as necessary within the spirit of the present invention. A wireless communication system using, for example, a frequency band of 5 GHz or a frequency band of 2.4 GHz or more may be used.

### < 4. Emergency Vehicle Notification Processing >

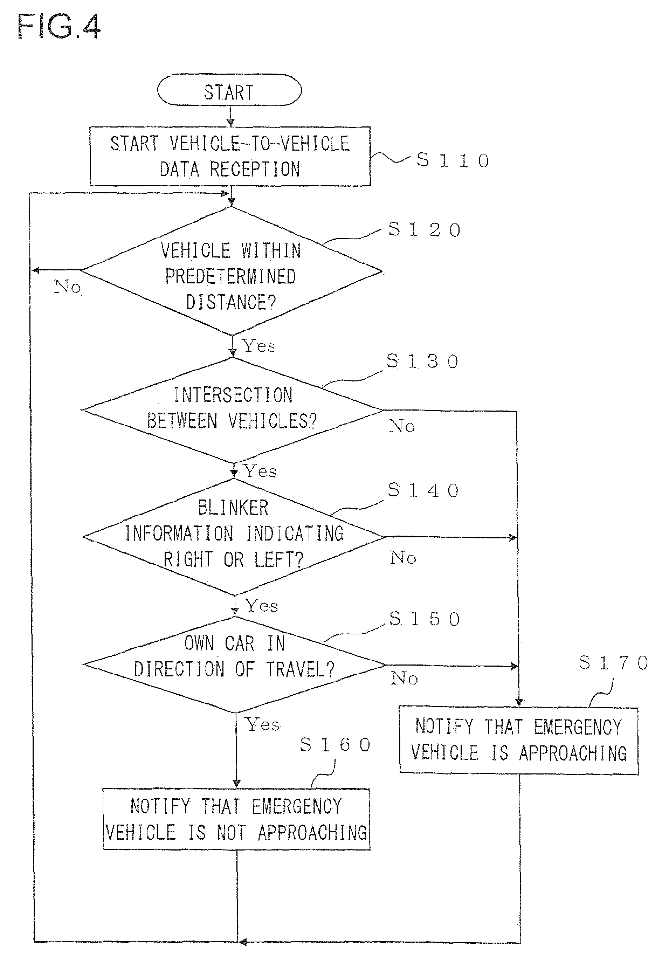

Here, a description will be given of the emergency vehicle notification processing performed by the navigation device 100 according to an embodiment of the present invention, with reference to a flow chart of FIG. 4. The processing flow shown in FIG. 4 is started when the navigation device 100 starts to be in operation. Note that this processing flow shows how the navigation device 100 installed in the own vehicle 1a operates, and shows nothing in particular about how the navigation device 100 installed in the emergency vehicle 1b operates. The processing flow shown in FIG. 4 is based on an assumption that vehicles are driving according to Japan's Road Traffic Act.

When the present processing is started, the emergency vehicle detection section 11b, in step S110, starts receiving processing of receiving vehicle-to-vehicle communication information from the emergency vehicle 1b with a cycle of 100 milliseconds.

Next, the emergency vehicle detection section 11b, in step S120, judges whether or not the emergency vehicle 1b has approached the own vehicle 1a to within a predetermined distance, for example, 300 meters, from the own vehicle 1a. Specifically, for example, the vehicle-to-vehicle communication information shown in FIG. 3 is transmitted/received by using an ITS.

Then, by referring to item 4 "transmitter classification", item 15 "emergency driving state of emergency vehicle", etc., a state of approach of the emergency vehicle is judged. Alto, as necessary, the state of approach is also judged with reference to, for example, a location of the own vehicle 1a acquired by the position information acquisition section I 1a by using the GPS antenna 12 and the positioning navigation device 13, and the map information recorded in the memory 18.

In a case in which the emergency vehicles 1b has not approached the own vehicle 1a to within the predetermined distance therefrom, reception of the vehicle-to-vehicle communication information and the distance between the vehicles continue to be monitored in step S120. In a case in which the emergency vehicle 1b has approached the own vehicle 1a to within the predetermined distance wherefrom, the judgment section 11c, in step S130, judges whether or not there is one ore more intersections between the emergency vehicle 1b and the own vehicle 1a.

Specifically, for example, the judgment of whether or not there is one or more intersections is performed based on the position information of the emergency vehicle 1b included in the received vehicle-to-vehicle communication information, the position information of the own vehicle 1a acquired by the position information acquisition section 1 1a, the map information recorded in the memory 18, etc.

In a case in which there is no intersection, the flow proceeds to step S170 which will be described later. In a case in which there is one ore more intersections, the judgment section 11c, in step S140, refers to the blinker information included in the vehicle-to-vehicle communication information. And the judgment section 1 1c judges whether or not the blinker information indicates that the emergency vehicle 1b is going to turn right or left.

In a case in which the blinker information does not indicate that the emergency vehicle 1b is going to turn right or left, the flow proceeds to step S170, which will be described later. In a case in which the blinker information indicates that the emergency vehicle 1b is going to turn right or left, the judgment section 11c, in step S150, judges whether or not the own vehicle 1 a exists in a direction that the blinker information indicates.

Incidentally, as to a method of the judgment here, as in step S130, the judgment is made based on a mutual positional relationship calculated by using the position information of the emergency vehicle 1b, the position information of the own vehicle 1a, the map information, etc.

In a case in which the own vehicle 1a does not exist in the direction indicated by the blinker information, the notification section 11d, in step S160, provides a message to the effect that the emergency vehicle 1b is not approaching, for example, a message like "the ambulance approaching from behind is going to turn right."

Specifically, a message image is generated by, for example, an OLD processing circuit (not shown), and the resultant message image is displayed on the LCD 14. Alternatively, a notification voice generated and recorded in the memory 18, etc, in advance is read out to be outputted from the speaker 17.

Back to step S150, in a case in which the own vehicle 1a exists in the direction indicated by the blinker information, the notification section 11d, in step S170, provides a message to the effect that the emergency vehicle 1b is approaching, for example, a message like "the ambulance is going to turn right and approach the own vehicle 1a."

When the notification according to step S160 or S170 is complected, the flow returns to step S120. In step S120, the distance between the own vehicle la and the emergency vehicle 1b continues to be monitored.

A description will be given of a notification example of the present embodiment executed through the above-described processing, with reference to FIGS 5 and 6. FIG. 5 shows an example in which the emergency vehicle 1b approaching the own vehicle la from behind makes a right turn at an intersection behind the own vehicle la. The approaching emergency vehicle 1b approaches the intersection with its right blinker on. In this case, the own vehicle la, that is, an own vehicle, does not have to give way to the emergency vehicle 1b. Thus, through the above-described processing, a message is provided to the effect that "the ambulance approaching from behind is going to turn right."

FIG. 6 shows an example in which the emergency vehicle 1b turns right at an intersection into where the own vehicle 1a is located. In this case, the right blinker of the emergency vehicle 1b is ON. That is, since the own vehicle la exists in the direction in which the emergency vehicle 1b is driving, the own vehicle la needs to give way to the emergency vehicle 1b. Thus, through the above-described processing, a message is provided to the effect that "the ambulance is going to turn right and approach the own vehicle 1a."

According to the hitherto described embodiments, it is possible to notify a passenger of the own vehicle la in advance whether or not the approaching emergency vehicle 1b is going to overtake the own vehicle 1a from behind, or whether or not there is a possibility of the approaching emergency vehicle 1b crossing the own vehicle la from front. In this way, it is possible to provides the driver of the own vehicle la with information to assist him/her in deciding whether he/she should move his/her vehicle to the left or not.

### [Other Embodiments]

Although the present invention has been described hereinbefore with preferred embodiments and examples, they are not meant to limit the present invention, and the present invention can be practiced with various modifications within the technical idea of the present invention.

Therefore, the present invention is also applicable to the following embodiments.

(A) In the above-described embodiments, the functional sections of the navigation device 100 related to the various kinds of processing of the present invention are achieved by a program executed by an arithmetic processing section such as a micro processor; however, the functional sections may be achieved by a plurality of circuits.

(B) The above-described embodiments deal with examples in which the GPS device is accommodated inside the navigation device 100; however, the GPS device does not necessarily need to be in a housing of the navigation device 100. For example, the navigation device 100 and the GPS device may each be provided with a communication section, to operate in the same manner as described above by transferring data via the communication sections.

(C) Although the above-described embodiments deal with the navigation device 100 as an example of the vehicle-to-vehicle communication device that performs the notification processing of the present invention, but the present invention may be practiced with any other devices as long as vehicle-to-vehicle communication can be achieved. For example, the present invention may be practiced in an ITS terminal or the like that does not have a navigation function.

(D) In the above-described embodiments, an approaching emergency vehicle is detected through vehicle-to-vehicle communication, but the detection may be achieved by road-to-vehicle communication in which information emitted from an emergency vehicle is received via a road-side device.

### List of Reference Symbols

- 1: vehicle
- 1a: own vehicle
- 1b: emergency vehicle
- 2: GYPS satellite
- 100: navigation device (= vehicle-to-vehicle communication device)
- 11: control section
- 11a: position information acquisition section
- 11b: emergency vehicle detection section
- 11c: judgment section
- 11d: notification section
- 12: GYPS antenna (GPS device)
- 13: positioning navigation device (GPS device)
- 14: LCD (display section)
- 15: display control section
- 16: operated section
- 17: speaker (voice output section)
- 18: memory (recording section)
- 19: antenna (wireless communication section)
- 20: communication control section (wireless communication section)

## Claims

1. A vehicle-to-vehicle communication device, comprising:
a wireless communication section which performs wireless communication by using an antenna;
a GPS (Global Positioning System) device which performs communication with a GPS satellite;
a position information acquisition section which acquires position information by using the GYPS device;
a display section or a voice output section;
a recording section in which map information is recorded;
an emergency vehicle detection section which receives emergency vehicle information including information related to an emergency vehicle via the wireless communication section, the emergency vehicle detection section judging, based on the position information, the emergency vehicle information, or the map information, whether or not the emergency vehicle exists within a predetermined range from an own vehicle which is a vehicle in which the vehicle-to-vehicle communication device is installed;
a judgment section which, in a case where the emergency vehicle is detected by the emergency vehicle detection section, judges a state of approach of the emergency vehicle with respect to the own vehicle based on the position information, the emergency vehicle information, or the map information; and
a notification section which provides a passenger of the own vehicle with a notification indicating the state of approach judged by the judgment section, by using the display section or the voice output section.

2. The vehicle-to-vehicle communication device of claim 1,
wherein
the judgment section judges, based on the position information, the map information, and a position and a blinker operation state of an emergency vehicle indicated in the emergency vehicle information, whether or not the emergency vehicle is going to overtake the own vehicle from behind, or, whether or not the emergency vehicle is going to cross the own vehicle from front; and
the notification section provides a notification indicating a result of said judgment.

3. The vehicle-to-vehicle communication device of claim 1,
wherein
in a case in which result of the judgment indicates that the emergency vehicle is not going to overtake the own vehicle from behind or that the emergency vehicle is not going to cross the own vehicle from front, the notification section provides a notification indicating that the own vehicle does not need to take avoidance actions.

4. The vehicle-to-vehicle communication device of claim 1,
wherein
the emergency vehicle detection section receives the emergency vehicle information by performing wireless communication with the emergency vehicle, a roadside device placed on a road, or a vehicle existing around the own vehicle by using ITS (Intelligent Transportation Systems).
